# EUROPEAN PATENT SPECIFICATION

(11) **EP 2 916 016 B1**
(45) Date of publication and mention of the grant of the patent: **26.07.2017**
(21) Application number: 13850835.3
(22) Date of filing: 04.10.2013
(51) Int. Cl.: F16B 19/10, F16B 13/06

(54) **BLIND RIVET AND SEALING STRUCTURE USING SAME**
BLINDNIET UND DICHTUNGSANORDNUNG DAMIT
RIVET BORGNE ET STRUCTURE D'ÉTANCHÉITÉ L'UTILISANT

(30) Priority: 31.10.2012 JP 2012240006
(43) Date of publication of application: 09.09.2015
(73) Proprietor: Newfrey LLC, New Britain, CT 06053 (US)
(72) Inventor: MAKINO Takanori, Toyohashi-shi Aichi 441-8540 (JP); SAKODA Kanji, Toyohashi-shi Aichi 441-8540 (JP)
(74) Representative: Haar, Lucas Heinz Jörn
(86) International application number: PCT/JP2013/077150
(87) International publication number: WO 2014/069166

(56) References cited:
- EP-A1- 0 766 012
- GB-A- 738 741
- JP-A- H10 141 342
- JP-A- 2004 340 334
- JP-A- 2012 145 167
- JP-B- S4 739 837
- JP-B1- S4 615 569
- JP-U- S58 167 306
- US-A- 3 345 901
- US-A- 3 534 419
- US-A- 5 689 873

## Description

### Technical Field

The invention relates to a blind rivet. In particular, it relates to a blind rivet and sealing structure using same that has a taper on the reverse side of the blind rivet with a high degree of mounting stress and can achieve sufficient water tightness with a single blind rivet.

### Background Art

Blind rivets that are provided with a metal rivet main body having a sleeve and a flange on one end of the sleeve; and a metal mandrel having a head and a shaft extending from the head, are well known. An advantage of a blind rivet is that it can connect to a plurality of panels by working from just one side.

A user would expect sufficient sealing and a high degree of water tightness between the rivet and the base body such as a panel (the attached member) after the blind rivet is fastened.

There are two types of blind rivets. One is a sealed type in which the head of the mandrel, which causes the rivet main body to change when fastening, is set in the middle of the rivet, and the remaining head of the mandrel is not exposed to the blind side opposite the working side after fastening to the base body. The other is an open type in which the head of the mandrel sticks out of the rivet, and the remaining head of the mandrel is exposed to the blind side after fastening to the base body.

The open type blind rivet is not sufficiently watertight; it is easy for liquid to seep between the rivet main body and the remaining head of the mandrel because the remaining head of the mandrel is exposed to the blind side after fastening. The sealed type of blind rivet has excellent water tightness; after fastening, it is more difficult for liquid to seep compared to the open type, because only the rivet main body is exposed to the blind side after fastening.

JP 2012-9288 A discloses a sealing device consisting of a sealed type blind rivet, which seals the opening of a sealed rechargeable battery, and a resinous sleeve. The sealing device is provided with a metal core having a shaft and a large-diameter portion, a flange bottomed metallic cylindrical member and a flange bottomed resinous sleeve into which part of the metallic cylindrical member is inserted from the opening side. When the metal core is pulled out of the metallic cylindrical member, the metallic cylindrical member is modified by the large-diameter portion expanding in a radial direction. The resinous sleeve, expanding in a radial direction by the deformation of the metallic cylindrical member, seals the opening of the sealed rechargeable battery. The sealing device of JP 2012-9288 A, while maintaining cohesion of the resinous sleeve and the battery contents, is able to hold a hermetic seal of the battery. However, because it uses a bottomed resinous sleeve besides a blind rivet, the number of parts will be many, and cost will be high.

JP 2012-145167 A discloses a shield type blind rivet consisting of a mandrel and a rivet. The mandrel has a shape of a round rod and has a large diameter head on one end. The rivet has a rivet main body in which one end is closed in the shape of a cylinder, and a flange on the other end of the rivet main body. The rivet has the mandrel set so that it cannot come out by sealing the head when positioning it on the closed end. The rivet main body has a tapered portion whose exterior form gets gradually smaller toward one end from the part connecting with the flange.

Because it has a tapered portion, in the blind rivet of JP 2012-145167 A; the area of overlap of the hole of a plate for the rivet and the rivet main body becomes larger and a high degree of water tightness can be attained.

However, this tapered portion is provided with a small angle on the rivet main body, and it is assumed that it will overlap the hole of a plate for the rivet. Thus, if the variation of the inner diameter of the hole of a plate for the rivet is great, it is easy in the blind rivet of JP 2012-145167 A for a part of the hole of a plate for the rivet not to overlap, and a high degree of water tightness cannot be attained at all.

JP 2002-529663 A discloses a blind rivet consisting of an outer part having a head and a shank extending from the head in which a bottomed axial hole is formed, and an inner part that has a stem head and a stem disposed in the axial hole. The shank has a shank fastening part with a taper. The blind rivet of JP 2002-529663 A resolves a problem with insufficient filling of the hole below the head, as the shank surely engages to the work piece hole.

However, the blind rivet of JP 2002-529663 A is of the open type and, because the remainder portion of the mandrel is exposed to the blind side, it is easy for leaking of liquid to occur between the rivet main body and the remainder part of the mandrel. Thus water tightness is insufficient which is an inherent problem with the open type.

A blind rivet as defined in the preamble of claim 1 is disclosed in GB 738 741 A and comprises a rivet main body having a disc-shaped large-diameter flange, a sleeve extending in an axial direction from the flange, and a closed-end hole formed from a surface of the flange to the bottom of the sleeve. A mandrel is arranged in the closed-end hole having a head placed at the bottom of the closed-end hole and a slender shaft which extends out from the upper surface of the flange. When the rivet is set there is no hollow right through the rivet so that the riveted joint is substantially watertight. However, the water tightness depends on the surface contact between the rivet and the jointed parts, which may be insufficient.

US 5 689 873 A discloses a temporary fastener of the pull through type which is unable to seal the hole in the workpiece after setting. The fastener includes a shank and a conical shaped head that extends from one end of the shank. The head will center the shank with the hole even if the hole diameter varies from a nominal dimension and the conical shape of the head reduces the amount of drill chips produced during operations for removing the fastener.

For this reason, we are seeking a blind rivet having a sufficient seal in the single blind rivet and a high degree of water tightness without the use of a washer or an O-ring.

### Summary of the Invention

### Problem the Invention Would Solve

Thus, the object of the present invention is to provide a blind rivet that achieves a satisfactory seal with a single blind rivet.

An additional object of the invention is to provide a sealing structure using this blind rivet.

### Means of Solving the Problem

In order to achieve this object, the invention has a tapered portion adjacent to the flange of the rivet main body of the blind rivet, the contact area of the edge of the opening of the base body and the back of the flange becomes small, the contact stress of the small contracting portion is increased. A secure seal is obtained thereby.

One aspect of the invention is a blind rivet for fastening to a base body having an opening, wherein the blind rivet comprises:
a rivet main body having a thick, disc-shaped large-diameter flange, a tapered portion which is adjacent to the flange and which has an outer diameter that becomes small as distance from the flange increases, a sleeve extending in an axial direction from the tapered portion and a closed-end hole formed from a surface of the flange to the bottom of the sleeve; and
a mandrel having a head and a slender shaft which has a smaller diameter than the head and which extends from the head.
The head of the mandrel is arranged at the bottom of the close-end hole on the rivet main body.
The shaft is assembled so that the shaft extends out from the upper surface of the flange of the rivet main body.
In the sleeve of the rivet main body, a thick portion with an inner diameter smaller than the outer diameter of the head is formed at a position adjacent to the head of the mandrel.
The head is held by the thick portion such that the head cannot be pulled out from the closed-end hole of the rivet main body, and the tapered portion is adapted to deform so that a linear seal portion is formed when the blind rivet is fastened to the base body.

This blind rivet is a sealed type with good sealing characteristics. Also, when there is a tapered portion adjacent to the flange of the rivet main body, contact of the taper and the edge of the opening of the base body can be securely made. The thick, disc-shaped flange is rigid and difficult to deform.

In the cross-section containing the central axis of the rivet main body, the angle formed by the tapered surface of the tapered portion and the straight line orthogonal to the central axis of the blind rivet is 3-80°.

An angle of 15-35° is preferable.

When the tapered portion inclines at this angle, the tapered portion of the rivet main body and the edge of the opening of the base body can touch at an appropriate angle and make contact at an adequately narrow width.

It is desirable that the thickness of the flange of the rivet main body is 15-75% of the outer diameter of the sleeve.

The flange has sufficient thickness and rigidity, there is little deformation of the flange and the adjacent tapered portion overall and a seal can be securely made at an adequately narrow width.

An additional aspect of the invention is a sealing structure including a base body and a blind rivet according to the invention wherein, when the flange of the rivet main body be held and the shaft of the mandrel is pulled out, the material of the sleeve of the rivet main body is pushed outward by the head of the mandrel and expands in diameter, and a section with expanded diameter is formed. The base body is sandwiched between the expanded diameter portion of the rivet main body and the tapered portion of the blind rivet, and the blind rivet is fastened to the base body.

It is desirable that a linear seal portion is formed between the tapered portion and the edge of the opening on the upper surface of the base body.

The tapered portion of the rivet main body and the edge of the opening of the base body securely make a metal seal at a narrow width.

It is desirable for the mandrel, when fastened to the base body, to fracture at a small-diameter breakable portion of the shaft, and the portion from the breakable portion to the head remains on the fastening portion.

An aspect of the invention is the sealing structure to seal the opening of the base body, in which the top boundary of the opening is formed like an edge and while the blind rivet is fastened to the opening, the tapered portion and the top edge of the opening come into contact with each other to seal the opening.

### Effect of the Invention

According to the invention, sufficient sealing characteristics are achieved with a single blind rivet, and a blind rivet with a high degree of water-tightness is obtained.

Also, a sealing structure that uses this blind rivet is obtained.

### Brief Explanation of the Drawings

Figure 1 is an upright view with a partial cross-section of the blind rivet of the first embodiment of the invention.
Fig. 2 is an upright view with a partial cross-section showing the insertion of the blind rivet of Fig. 1 into the opening of the base body.
Fig. 3 is an upright view with a partial cross-section of the blind rivet of Fig. 1 fastened to the base body.
Fig. 4 is an upright view with a partial cross-section of a blind rivet of prior art with attached washer that is fastened to the base body.
Fig. 5 is an upright view with a partial cross-section of a blind rivet of prior art without a tapered portion that is fastened to the base body.

### Embodiment of the Invention

Below, the blind rivet according to the embodiments of the invention will be described.

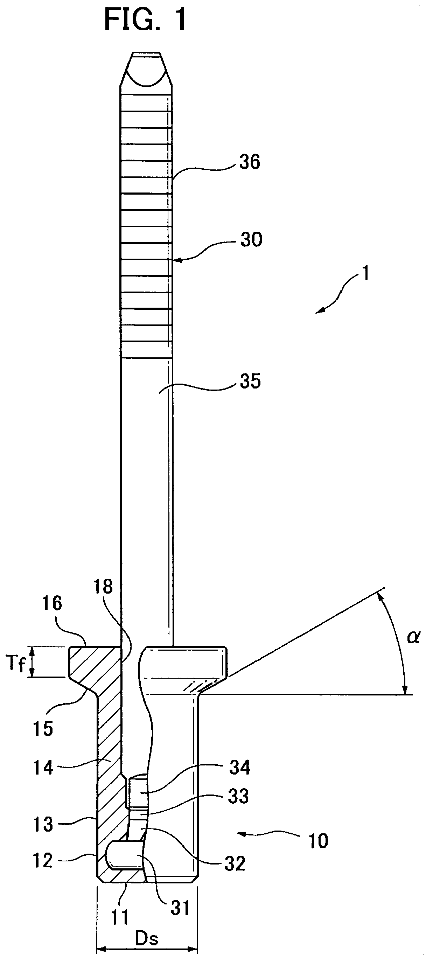

Fig. 1 is an upright view with a partial cross-section of the blind rivet of the first embodiment of the invention. In the description of the invention, the top of Fig. 1 is the up direction, and the bottom is the down direction. The blind rivet 1 is provided with a rivet main body 10 and a mandrel 30. A head 31 of the mandrel 30 and a part of a shaft are inserted into the closed-end hole 18 of the rivet main body 10 and fixed.

### (Mandrel)

The mandrel 30 has a head 31 at one end. The head 31 has the shape of a large-diameter disk. The mandrel 30 has a slender shaft that adjoins the head 31. The shaft has a shaft base 32, a breakable portion 33, a small-diameter portion 34, a shaft portion 35 and a gripping portion 36. The portion adjacent to the head 31 of the shaft is a columnar shaft base 32 that has a smaller diameter than that of the head 31. Adjacent to the shaft base 32 there is a breakable portion 33 that has a smaller diameter than that of the shaft base 32. In assembling the blind rivet 1, the breakable portion 33 is the portion that is to be seated in the closed-end hole 18 of the rivet main body 10. When the shaft of the mandrel 30 is pulled out with a fastening machine, an extraction force which exceeds a certain extraction force is added and the mandrel 30 breaks at the breakable portion 33.

Adjacent to the breakable portion 33, there is a small-diameter portion 34 with an outer diameter larger than that of the breakable portion 33. The diameter of the small-diameter portion 34 is nearly equal to the diameter of the shaft base 32. Adjacent to the small-diameter portion 34, there is a shaft portion 35 of a slender cylindrical shape with a diameter larger than that of the small-diameter portion 34 but smaller than that of the head 31. Adjacent to the shaft portion 35, there is a gripping portion 36 with nearly an equal diameter to that of the shaft portion 35. On the gripping portion 36, several engagement grooves are formed at regular intervals around the circumference so as not to cause slipping when gripped by the gripping member of the engagement machine.

The material of the mandrel 30 is steel, aluminum, stainless steel, etc. and the material is harder than that of the rivet main body 10.

### (Rivet Main Body)

The rivet main body 10 is of cylindrical shape as a hole and has a flange 16 at one end, a tapered portion 15 and a sleeve. The other end of the sleeve is closed. The sleeve has a bottom 11, a thin section 12, a thick section 13 and a cylindrical portion 14. The end of sleeve, the other end, is the bottom 11. The under surface of the bottom 11 is a flat, round surface. Adjacent to the bottom 11, there is thin section 12 that surrounds the head 31 of the mandrel 30. Adjacent to the thin section 12, there is a thick section 13 that surrounds the shaft base 32, the breakable portion 33 and the small-diameter portion 34 of the mandrel 30. Adjacent to the thick section 13, there is a cylindrical portion 14 that surrounds the shaft portion 35 of the mandrel 30. The outer diameter of the sleeve (thin section 12, thick section 13 and cylindrical portion 14) is roughly equal to the inner diameter of the opening 53 of the base body 51 or a little smaller, of a size that can be inserted into the opening 53.

The opening 53 of the base body 51 generally has a round cross-section and is a hole that has to be sealed.

The top boundary of the opening 53 is formed in the shape of an edge, and a tapered portion is not formed.

Adjacent to the cylindrical portion 14, there is a tapered portion 15 of a circular truncated cone shape. When the blind rivet 1 is inserted into the opening 53 of the base body 51 with the bottom 11 first, the portion near the boundary of the cylindrical portion 14 of the tapered portion 15 contacts the edge of the opening, and the blind rivet 1 is stopped. The angle between the cylindrical portion 14 and the tapered portion 15 suddenly changes without continuing as a curve. The diameter of the tapered portion 15 tends to become larger from the cylindrical portion 14 to the flange 16.

The angle *α* between the tapered portion 15 and the surface orthogonal to the central axis of the rivet main body 10 is 3-80°. That is, in the cross section containing the central axis of the rivet main body 10, the straight line of the taper surface of the tapered portion 15 and the straight line orthogonal to the central axis of the rivet main body 10 cross at an angle of 3-80° (the angle (90°-*α*) of the straight line of the tapered surface and the central axis of the rivet main body is 20° -87°). Preferably, this angle *α* is 15-35°.

Adjacent to the tapered portion 15, there is a large-diameter flange 16. The top of the flange 16 is flat. The flange 16 is of a thick discoid shape, and its outer diameter is uniform from the top to the boundary of the tapered portion 15. The flange 16 has sufficient hardness. The thickness Tf of the flange 16 is 15-75% of the diameter Ds of the sleeve. Here, the dimensions Tf and Ds are the measurements when the rivet main body 10 and the mandrel 30 are assembled, as shown in Fig. 1.

The material of the rivet main body 10 is steel, aluminum, stainless steel, copper, etc. and is formed with a softer material than that of the mandrel 30.

On the inside of the rivet main body 10, a closed-end hole 18 is formed that extends axially downward from the top of the flange 16. The head 31 of the mandrel 30 is adjacent to the bottom 11, and the shaft base 32, breakable portion 33 and part of the small-diameter portion 34 are set into the closed-end hole 18. The head 31 of the mandrel 30, the upper edge of which is pressed by the thick section 13 of the rivet main body 10, will not come out.

The inner diameter of the closed-end hole 18 of the rivet main body 10 before the mandrel 30 is inserted is an uniform diameter equal to or larger than the outer diameter of the head 31 of the mandrel 30, and the head 31 can be inserted into the closed-end hole with the head first. The diameter of the sleeve (thin section 12, thick section 13, cylindrical portion 14) of the rivet main body 10 before inserting the mandrel 30 is uniform.

### (Blind Rivet)

In order to prepare the blind rivet in which a rivet main body 10 and a mandrel 30 is assembled as shown in Fig. 1, the mandrel 30 is inserted into the closed-end hole of the rivet main body 10 with the head 31 going first. The head 31 of the mandrel 30 is inserted up to a position abutting the inner surface of the bottom 11. In this situation, the inner circumference of the closed-end hole 18 and the head 31 are in close contact or have a tiny space between them. There is a space between the inner circumference of the closed-end hole 18 and the shaft base 32, the breakable portion 33 and the small diameter portion 34 of the mandrel 30.

After the mandrel 30 is inserted into the closed-end hole 18, the sleeve portion is narrowed to a uniform diameter from the bottom 11 up to the tapered portion 15 by a rolling, restriction process or the like, and the material of the sleeve moves into the space between the inner circumference of the closed-end hole 18 and the shaft base 32, the breakable portion 33 and the small diameter portion 34 of the mandrel 30. As shown in Fig. 1, there is no space between the inner circumference of the closed-end hole 18 and the shaft base 32, the breakable portion 33 and the small diameter portion 34 of the mandrel 30. The shapes of the thick section 13 of the rivet main body 10 and cylindrical portion 14 are then formed.

Thus, the thick section 13 is in contact with the top of the head 31 and the head 31 cannot be pulled out from the closed-end hole 18.

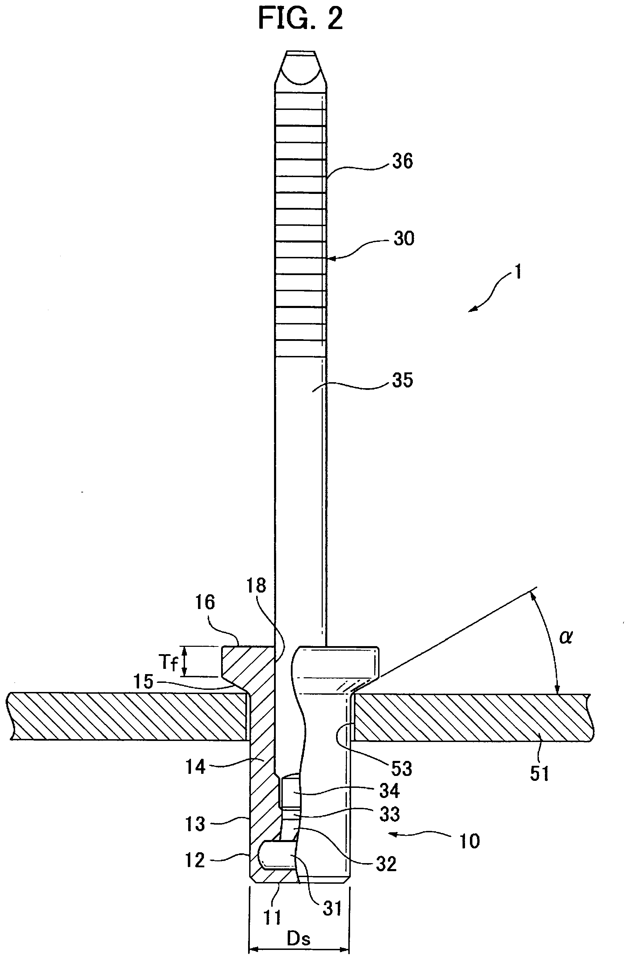

Fig. 2 is an upright view of a partial cross-section showing the situation where the blind rivet of Fig. 1 is inserted into the opening 53 of the base body 51. The lower side of Fig. 2 is the blind side, and the operation of installing the blind rivet 1 is carried out from above.

The base body 51 is one piece, but the base body 51 could be several pieces. In that case, the positions of the openings 53 of each base body 51 are superimposed to fit.

When the blind rivet 1 of Fig. 1, assembled with a rivet main body 10 and a mandrel 30, is inserted into the opening 53 of the base body 51 from the top in Fig. 2, the tapered portion 15 of the rivet main body 10 abuts the surface around the opening 53 of the base body in the situation of Fig. 2.

### (Fastening)

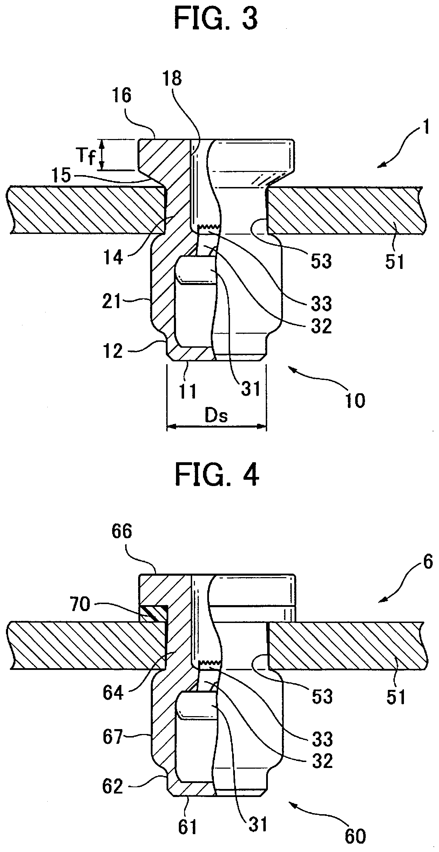

In reference to Figs. 2 and 3, fastening of the blind rivet 1 of the embodiment of the invention onto the base body 51 will be described.

From the situation of Fig. 2, the top of the flange 16 of the rivet main body 10 is supported, the gripping portion 36 of the mandrel 30 is gripped by the gripping member of the fastening mechanism, and it is drawn upward. The head 31 of the mandrel 30, while expanding the thick section 13 of the rivet main body 10 from inside, moves up. The head 31, while expanding also the cylindrical part 14 adjacent the thick section 13 from inside, moves up. The diameter of the thick section 13 and the cylindrical portion 14 become larger with the expansion by the head 31 and the length of the thick section 13 and the cylindrical portion 14 becomes smaller. By the deformation of the thick section 13 and the cylindrical portion 14, an expanded diameter portion 21 is formed. The outer diameter of the expanded diameter portion 21 becomes larger than the inner diameter of the opening 53, and the inner diameter is nearly equal to the outer diameter of the head 31.

The part of the cylindrical portion 14 inside the opening 53 of the base body 51 is enclosed by the opening 53 and will not bulge. When the head 31 of the mandrel 30 approaches the base body 51, the head 31, not being able to expand the cylindrical portion 14, cannot rise above it.

When the gripping portion 36 of the mandrel 30 is further drawn upward, the mandrel 30 is broken at the breakable portion 33. The head 31 and the shaft base 32 remain inside the rivet main body 10, and the shaft 35 and the gripping portion 36 are extracted from the closed-end hole 18 of the rivet main body 18. Thus, the base body 51 is sandwiched between the expanded diameter portion 21 of the rivet main body 10 and the tapered portion 15 and the blind rivet 1 is fastened.

The lower end of the tapered portion 15 and the inner edge of the opening 53 on the upper surface of the base body 51 are sealed by the high stress at the narrow line. The upper boundary of the opening 53 of the base body 51 is formed like an edge, and a taper is not formed. Because of this, the upper edge of the opening 53 and tapered portion 15 of the rivet main body 10 will not contact with each other by a large width.

Also, the upper edge of the expanded diameter portion 21 and the inner edge of the opening 52 on the underside of the base body 51 are sealed by high stress at the line with narrow width. The metal of the rivet main body 10 and the metal of the base body 51 come into contact with each other, and are sealed.

According to the embodiment of the invention, the tapered portion 15 of the rivet main body 10 contacts the inner edge of the opening 53 of the base body 51 in a small area, and contacts with a strong stress. Because of this, the tapered portion 15 or the inner edge of the opening 53 or both deform and come into contact with each other. Thus an adequate sealing property and a high degree of water-tightness are obtained.

Also, with the blind rivet according to the embodiment of the invention and the opening 53 of the base body 51, a sealing structure that seals the opening 53 of the base body 51 is formed. In this sealing structure, the upper border of the opening 53 is formed like an edge. In the situation where the blind rivet is fastened to the opening 53, the tapered portion 15 and the upper edge of the opening 53 come into contact with each other, and thus the opening 53 is sealed.

### (Comparison Example 1)

Fig. 4 is a plan view of a partial cross-section when a resinous washer 70 is used and rivet main body 60 of prior art having a flange with a level bottom is fastened to the base body 51. The mandrel 30 is the same as the mandrel 30 of the embodiment of the invention and is shown with the same reference number. The base body 51 is the same as the base body 51 used in the embodiment of the invention and is shown with the same reference number. The rivet main body 60 of Comparison Example 1 has a bottom 61, a thin section 62, an expanded diameter portion 67, a cylindrical portion 64 inside the opening 53 and a flange 66.

The base body 51 is sandwiched between the expanded diameter portion 67 of the rivet main body 60 and the washer 70, and the blind rivet 6 is tightened to the base body 51.

After fastening the blind rivet 6 of Comparison Example 1, between the back of the flange 66 and the top of the washer 70 and between the bottom of the washer 70 and the base body 51, the contact surface is wide and the contact pressure between members is low, and thus a sufficient seal cannot be attained. Also, a resinous washer 70 is necessary besides the blind rivet 6, and the cost is increased.

### (Comparison Example 2)

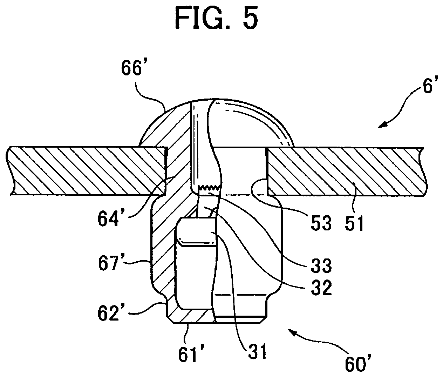

Fig. 5 is a plan view of a partial cross-section when a rivet main body 60' of prior art having a flange with a level bottom and a top spherical surface is fastened to the base body 51. The mandrel 30 is the same as the mandrel 30 of the embodiment of the invention and is shown with the same reference number. The base body 51 is the same as the base body 51 used in the embodiment of the invention and is shown with the same reference number. The rivet main body 60' has a bottom 61', a thin section 62', an expanded diameter portion 67', a cylindrical portion 64' inside the opening 53 and a flange 66'.

The base body 51 is sandwiched between the expanded diameter portion 67' of the rivet main body 60' and the flange 66' and the blind rivet 6' is fastened.

After fastening the blind rivet 6' of Comparison Example 2, between the back of the flange 66' and the base body 51, the contact surface is wide and the contact pressure between members is low, and thus a sufficient seal cannot be attained.

Compared to comparison Examples 1 and 2, the blind rivet according to the embodiment of the invention has a taper under the flange, so by means of high stress in a small area, it contacts the edge of the opening of the base body. Because of this, sufficient sealing property is attained with the single blind rivet, and a blind rivet with a high degree of water-tightness can be achieved.

### Explanation of Reference Numerals

- 1: blind rivet
- 6: blind rivet
- 10: rivet main body
- 11: bottom
- 12: thin section
- 13: thick section
- 14: cylindrical portion
- 15: tapered portion
- 16: flange
- 18: closed-end hole
- 21: expanded diameter portion
- 30: mandrel
- 31: head
- 32: shaft base
- 33: breakable portion
- 34: small-diameter portion
- 35: shaft
- 36: gripping portion
- 51: base body
- 53: opening
- 60: rivet main body
- 61: bottom
- 67: expanded diameter portion
- 70: washer

## Claims

1. A blind rivet (1) for fastening to a base body (51) having an opening (53), wherein the blind rivet comprises:
a rivet main body (10) having a thick, disc-shaped large-diameter flange (16), a sleeve extending in an axial direction from the flange (16), and a closed-end hole (18) formed from a surface of the flange (16) to the bottom of the sleeve; and
a mandrel (30) having a head (31) and a slender shaft which has a smaller diameter than the head (31) and which extends from the head (31) with;
wherein the head (31) of the mandrel (30) is arranged at the bottom of the closed-end hole (18) on the rivet main body,
the shaft is assembled so that the shaft extends out from the upper surface of the flange (16) of the rivet main body (10) ;
in the sleeve of the rivet main body (10), a thick portion (13) with an inner diameter smaller than the outer diameter of the head (31) is formed at a position adjacent to the head (31) of the mandrel (30); and
the head (31) is held by the thick portion (13) such that the head (31) cannot be pulled out from the closed-end hole (18) of the rivet main body (10);
**characterized in that** a tapered portion (15) is adjacent to the flange (16) and has an outer diameter that becomes smaller as distance from the flange (16) increases, the tapered portion (15) is adapted to deform so that a linear seal portion is formed when the blind rivet (1) is fastened to the base body (51).

2. The blind rivet (1) of Claim 1 in which, in the cross-section containing the central axis of the rivet main body (10), the angle formed by the tapered surface of the taper portion (15) and the straight line orthogonal to the central axis of the blind rivet (1) is 3-80°.

3. The blind rivet (1) of Claim 2 in which the angle is 15-35°.

4. The blind rivet (1) of any one of Claims 1 to 3 in which the thickness of the flange (16) of the rivet main body (10) is 15-75% of the outer diameter of the sleeve.

5. A sealing structure including the base body (51) and the blind rivet (1) of any one of Claims 1 to 4 in which, when the flange (16) of the rivet main body (10) is held and the shaft of the mandrel (30) is pulled out, the material of the sleeve of the rivet main body (10) is pushed outward by the head (31) of the mandrel (30) and expands in diameter, and an expanded diameter portion (21) is formed;
the base body (51) is sandwiched between the expanded diameter portion (21) of the rivet main body (10) and the tapered portion (15), and the blind rivet (1) is fastened to the base body (51).

6. The sealing structure of Claim 5 in which the linear seal portion is formed between the tapered portion (15) and the edge of the opening (53) on the upper surface of the base body (51).

7. The sealing structure of Claim 5 or 6 in which the mandrel (30), when fastened to the base body (51), fractures at a small-diameter breakable portion (33) of the shaft and the portion from the breakable portion (33) to the head (31) remains on the fastening portion.

8. The sealing structure of any one of Claims 5 to 7 to seal the opening of the base body (51), in which the top boundary of the opening (53) is formed like an edge, and while the blind rivet (1) is fastened to the opening (53), the tapered portion (15) which is deformed and the top edge of the opening (53) come into contact with each other at the line to seal the opening (53).

## Patentansprüche

1. Ein Blindniet (1) zur Befestigung an einem Grundkörper (51), der eine Öffnung (53) hat, wobei der Blindniet (1) umfasst:
Einen Niethauptkörper (10), der einen dicken, scheibenförmigen Flansch (16), eine sich in axialer Richtung von dem Flansch (16) erstreckende Buchse und ein endgeschlossenes Loch (18) aufweist, das von einer Fläche des Flanschs (16) bis zum Boden der Buchse gebildet ist; und
einen Dorn (30), der einen Kopf (31) und einen schlanken Schaft hat, der einen kleineren Durchmesser als der Kopf (31) hat und sich von dem Kopf (31) weg erstreckt;
wobei der Kopf (31) des Dorns (30) am Boden des endgeschlossenen Lochs (18) an dem Niethauptkörper (10) angeordnet ist,
der Schaft so montiert ist, dass der Schaft sich aus der oberen Fläche des Flanschs (16) des Niethauptkörpers (10) heraus erstreckt;
in der Buchse des Niethauptkörpers (10) ein dicker Abschnitt (13) mit einem inneren Durchmesser kleiner als der äußere Durchmesser des Kopfs (31) an einer an den Kopf (31) des Dorns (30) angrenzenden Stelle gebildet ist; und
der Kopf (31) durch den dicken Abschnitt (13) so gehalten ist, dass der Kopf (31) nicht aus dem endgeschlossenes Loch (18) des Niethauptkörpers (10) heraus gezogen werden kann;
**dadurch gekennzeichnet, dass** ein verjüngter Abschnitt (15) an den Flansch (16) angrenzt und einen Außendurchmesser hat, der kleiner wird, wenn der Abstand von dem Flansch (16) zunimmt, der verjüngte Abschnitt (15) dazu eingerichtet ist, sich zu verformen, so dass ein linearer Dichtabschnitt gebildet wird, wenn der Blindniet (1) an dem Grundkörper (51) befestigt wird.

2. Der Blindniet (1) nach Anspruch 1, bei dem in dem Querschnitt, der die Mittelachse des Niethauptkörpers (10) enthält, der von der verjüngten Fläche des verjüngten Abschnitts (15) und der zur Mittelachse des Blindniets (1) orthogonalen Geraden gebildete Winkel 3-80° ist.

3. Der Blindniet (1) nach Anspruch 2, bei dem der Winkel 15-35° ist.

4. Der Blindniet (1) nach einem der Ansprüche 1 bis 3, bei dem die Dicke des Flanschs (16) des Niethauptkörpers (10) 15-75% des Außendurchmessers der Buchse ist.

5. Eine Dichtungsanordnung umfassend den Grundkörper (51) und den Blindniet (1) nach einem der Ansprüche 1 bis 4, bei der, wenn der Flansch (16) des Niethauptkörpers (10) gehalten wird und der Schaft des Dorns (30) herausgezogen wird, das Material der Buchse des Niethauptkörpers (10) durch den Kopf (31) des Dorns (30) nach außen gedrückt wird und sich im Durchmesser erweitert, und ein Abschnitt (21) von erweitertem Durchmesser gebildet wird;
der Grundkörper (51) ist zwischen dem Abschnitt (21) von erweitertem Durchmesser des Niethauptkörpers (10) und dem verjüngten Abschnitt (15) eingeklemmt und der Blindniet (1) ist an dem Grundkörper (51) befestigt.

6. Die Dichtungsanordnung nach Anspruch 5, bei der der lineare Dichtabschnitt zwischen dem verjüngten Abschnitt (15) und der Kante der Öffnung (53) an der oberen Fläche des Grundkörpers (51) gebildet ist.

7. Die Dichtungsanordnung nach Anspruch 5 oder 6, bei der der Dorn (30), wenn er an dem Grundkörper (51) befestigt wird, an einem brechbaren Abschnitt (33) von kleinem Durchmesser des Schafts bricht und der an dem Kopf (31) befindliche Teil des brechbaren Abschnitts (33) an dem Befestigungsabschnitt verbleibt.

8. Die Dichtungsanordnung nach einem der Ansprüche 5 bis 7 zum Dichten der Öffnung des Grundkörpers (51), bei dem die obere Grenze der Öffnung (53) wie eine Kante gebildet ist, und, während der Blindniet (1) an der Öffnung (53) befestigt wird, gelangen der verjüngte Abschnitt (15), der verformt ist, und die obere Kante der Öffnung (53) an einer Linie in Kontakt miteinander, um die Öffnung (53) abzudichten.

## Revendications

1. Rivet aveugle (1) pour arrimage à un corps de base (51) ayant une ouverture (53), dans lequel le rivet aveugle comprend :
un corps principal de rivet (10) ayant une bride épaisse de grand diamètre en forme de disque (16), un manchon prolongeant la bride (16) dans une direction axiale, et un trou à bout fermé (18) formé depuis une surface de la bride (16) vers le fond du manchon ; et
un mandrin (30) ayant une tête (31) et un arbre mince qui a un plus petit diamètre que la tête (31) et qui prolonge la tête (31) ;
dans lequel la tête (31) du mandrin (30) est agencée au fond du trou à bout fermé (18) du corps principal de rivet,
l'arbre est assemblé de sorte que l'arbre débouche de la surface supérieure de la bride (16) du corps principal de rivet (10) ;
dans le manchon du corps principal de rivet (10), une portion épaisse (13) de diamètre interne plus petit que le diamètre externe de la tête (31) est formée en une position adjacente à la tête (31) du mandrin (30) ; et
la tête (31) est tenue par la portion épaisse (13) de telle sorte que la tête (31) ne puisse être extraite du trou à bout fermé (18) du corps principal de rivet (10) ;
**caractérisé en ce qu'**une portion effilée (15) est adjacente à la bride (16) et a un diamètre externe qui se réduit à mesure que la distance à partir de la bride (16) augmente, la portion effilée (15) est adaptée pour se déformer pour qu'une portion de joint linéaire soit formée lorsque le rivet aveugle (1) est arrimé au corps de base (51).

2. Rivet aveugle (1) selon la revendication 1, dans lequel, dans la section transversale contenant l'axe central du corps principal de rivet (10), l'angle formé par la surface effilée de la portion effilée (15) et la droite orthogonale à l'axe central du rivet aveugle (1) est de 3 à 80°.

3. Rivet aveugle (1) selon la revendication 2, dans lequel l'angle est de 15 à 35°.

4. Rivet aveugle (1) selon l'une quelconque des revendications 1 à 3, dans lequel l'épaisseur de la bride (16) du corps principal de rivet (10) est de 15 à 75 % du diamètre externe du manchon.

5. Structure d'étanchement incluant le corps de base (51) et le rivet aveugle (1) de l'une quelconque des revendications 1 à 4,
dans laquelle, lorsque la bride (16) du corps principal de rivet (10) est tenue et que l'arbre du mandrin (30) est extrait, le matériau du manchon du corps principal de rivet (10) est poussé vers l'extérieur par la tête (31) du mandrin (30) et voit son diamètre se dilater, et une portion de diamètre dilaté (21) est formée ;
le corps de base (51) est intercalé entre la portion de diamètre dilaté (21) du corps principal de rivet (10) et la portion effilée (15), et le rivet aveugle (1) est arrimé au corps de base (51).

6. Structure d'étanchement selon la revendication 5, dans laquelle la portion de joint linéaire est formée entre la portion effilée (15) et le bord de l'ouverture (53) sur la surface supérieure du corps de base (51).

7. Structure d'étanchement selon la revendication 5 ou 6, dans laquelle le mandrin (30), lorsqu'il est arrimé au corps de base (51), se fracture au niveau d'une portion cassable de petit diamètre (33) de l'arbre et la portion allant de la portion cassable (33) à la tête (31) reste sur la portion d'arrimage.

8. Structure d'étanchement selon l'une quelconque des revendications 5 à 7, pour étancher l'ouverture du corps de base (51), dans laquelle la frontière haute de l'ouverture (53) est formée comme un bord, et alors que le rivet aveugle (1) est arrimé à l'ouverture (53), la portion effilée (15) qui est déformée et le bord haut de l'ouverture (53) viennent en contact l'un avec l'autre au niveau de la ligne pour étancher l'ouverture (53).
